# EUROPEAN PATENT APPLICATION

(11) **EP 3 428 935 A1**
(43) Date of publication of application: **16.01.2019**
(21) Application number: 18182142.2
(22) Date of filing: 06.07.2018
(51) Int. Cl.: H01B 17/14, A01K 3/00

(54) **FASTENER AND ELECTRIC FENCE SYSTEM**

(30) Priority: 14.07.2017 FI 20175693
(71) Applicant: Mouse Out Oy, 13500 Hämeenlinna (FI)
(72) Inventor: POHJANVIRTA, Pekka, 13500 Hämeenlinna (FI)
(74) Representative: Boco IP Oy Ab

(57) **Abstract**

The fastener (1) for an electric fence system comprises an upper portion (18), a lower portion (11) and, located between them, at least one intermediate portion. Between the lower portion (11) and the intermediate portion, a first electric fence strip clamping slot (14) for a first electric fence strip (4) is formed, and between the intermediate portion and the upper portion (18), at a distance from the first electric fence strip clamping slot (14), a second electric fence strip clamping slot (17) for a second electric fence strip (4) is formed. Located on both sides of the clamping slots (14, 17) there are mutually opposite fastening parts (19) each having a hole (20), into which the fastening screw (5) by means of which the fastener (1) can be attached to the wall (3), the plinth (2), a mock socle or other above ground part of the foundation of a building, is to be screwed. The fastener (1) is made of an electrically insulating material, or it contains electrically insulating material, which is arranged such, that the support surfaces (12, 13, 15, 16) of the first clamping slot (14) and of the second clamping slot (17) are made of electrically insulating material.

## Description

### Field of the invention

The invention relates to preventing small rodents, mainly mice (in particular domestic mice and field mice), moles (in particular bank voles, water moles, short-taled voles) and rats (in particular brown rats and black rats) from entering a building.

### Technical background

From the Finnish utility model 11515, registered to an invention by this same inventor, an arrangement is known, wherein an electric fence strip extending around a building is attached to the wall or the foundation (such as the plinth) of the building, using fasteners.

The electric fence strip contains a reference wire, or a set of reference wires, connected by means of a connection lead to the reference potential of an electric fence device, i.e. the so called earth, and additionally at least one electric fence wire, or set of wires, connected to the high voltage output pole of the electric fence device using a connection lead. The reference potential of the electric fence device can be floating, or it may be connected to the ground potential by, for example, a separate earth conductor.

From the German patent application publication DE 195 11 582 A1 an isolator for an electric fence strip is known, by means of which isolator the electric fence strip can be attached to poles. The fastening parts of the isolator for the electric fence to which the electric fence strip is to be attached are implemented as electrically conducting.

The fasteners are designed such, that the electric fence strip can be attached to the foundations of a building in such a way, that the distance between the electric fence strip and the wall is essentially constant. The fasteners mechanically fasten the electric fence strip to the wall surface of the building (the wall or the plinth), but they electrically isolate the electric fence strip from the building. The electric fence strip, most preferably having a flat cross-section, can be tightened using the fasteners so that it forms a plane essentially parallell to the wall surface, in which plane at least one of the wires or sets of wires contained in the electric fence strip is located in a lower portion of the electric fence strip, and at least one in an upper portion of the strip.

### Objective of the invention

The object of the invention is to improve the functional effectiveness of such an arrangement in which an electric fence strip is attached to a wall or foundation (for example a plinth or a mock socle) of a building using fasteners, which electric fence strip extends around the building. At doors and/or passage openings, the arrangement known from the Finnish utility model 11515 can be used.

Herein, the term functional effectiveness is intended to mean that by using an electric fence system comprising fasteners according to the present invention, you will be able to better prevent mice, voles, and possibly also rats, from entering a building.

The objective of the invention can be accomplished by means of the fastener according to the independent claim and by means of the electric fence system according to the parallel independent claim.

The dependent claims show inventive aspects of the fastener and the electric fence system.

### Benefits of the invention

The fastener to the electric fence system comprises
- an upper portion, a lower portion, and, located between them, at least one intermediate portion, being arranged such, that:
   ∘ a first electric fence strip clamping slot for a first electric fence strip is formed between the lower portion and the intermediate portion, and
   ∘ a second electric fence strip clamping slot for a second electric fence strip is formed between the intermediate portion and the upper portion at a distance from the first electric fence strip clamping slot,
- located on both sides of the clamping slots, mutually opposite fastening portions, each having a hole receiving a fastening screw by means of which the fastener can be mounted to the wall (3), the plinth, the mock socle or other above ground part of the foundation of a building; and
- the first and the second clamping slot both being tightenable by tightening the fastening screws such that the electric fence strip located in each clamping slot is being locked in place as the fastening screw, as it is being screwed in, is pressing on the upper surface of the clamping slot in question against the lower surface finally locking both electric fence strips in place.

The fastener is made of an electrically insulating material or it contains electrically insulating material, which is arranged in such a way, that the supporting surfaces of the first clamping slot and of the second clamping slot are made of an electrically insulating material.

Most preferably the fastener is implemented such that the distance between the first clamping slot and the lower edge of the fastener (in other words, the part ending up against the wall, the plinth, the mock socle or other above ground part of the foundation of the building), is most preferably 1 - 2 cm.

The distance between the first clamping slot and the second clamping slot is most preferably 1.5 - 2.5 cm.

By means of the fastener it is possible to improve the functional effectiveness of such an arrangement in which an electric fence strip is attached to the wall or foundation (for example the plinth or the mock socle) of a building by using fasteners, said electric fence strip extending around the building. Due to the first and the second electric fence strip one is enabled to prevent small rodents, primarily mice (in particular domestic mice and field mice), moles (in particular bank voles, water moles, short-taled voles) and even rats (in particular brown rats and black rats) from entering a building. Any small rodent running under the first electric fence strip will receive an electric shock, as well as any small rodent running between the first electric fence strip and the second electric fence strip. On the other hand, jumping over both electric fence strips is then clearly more difficult for a rodent.

Moreover, the fastener can be mounted to the wall, plinth, mock socle or other above ground part of the foundation of a building in a fairly simple manner. The mounting of the fastener simultaneously locks both electric fence strips, which facilitates the installation job. The electric fence strip can be locked securely enough by means of the fastener.

The fastener can comprise even a third clamping slot for a third electric fence strip. In that case, the functional effectiveness of the electric fence system according to the invention can be improved, in particular against rats, since then, jumping over the electric fence system will be even more difficult.

Preferably, the fastener comprises an upper portion, a lower portion, and a connector in connection with at least one intermediate portion located between these, said connector holding the upper portion, the lower portion, and, located between these, the at least one intermediate portion connected to each other, when the fastener has not yet been mounted to its installation substrate. This facilitates the assembling of the electric fence system.

The electric fence system comprises a first electric fence strip and a second electric fence strip, attached, by means of a number of fasteners according to the invention, to the wall, plinth, mock socle or other above ground part of the foundation of a building, which electric fence strips extend around the building.

The first electric fence strip located closer to the building will remain galvanically separated from the building by means of the fastener, and the second electric fence strip located further away from the building than the first electric fence strip will remain galvanically separated from the first electric fence strip by means of the fastener.

### List of figures

The fastener and the electric fence system will be described below in more detail with the aid of application examples shown in the figures. In the figures are shown:
- FIG 1: an electric fence system attached to the plinth of a building;
- FIG 2: a closer view of an electric fence system;
- FIG 3: a fastener viewed obliquely from above (from the side of the fastening screw); and
- FIG 4: a fastener viewed obliquely from below (from the building side).

Same reference numbers reference same technical characteristics in all the figures.

### Detailed description

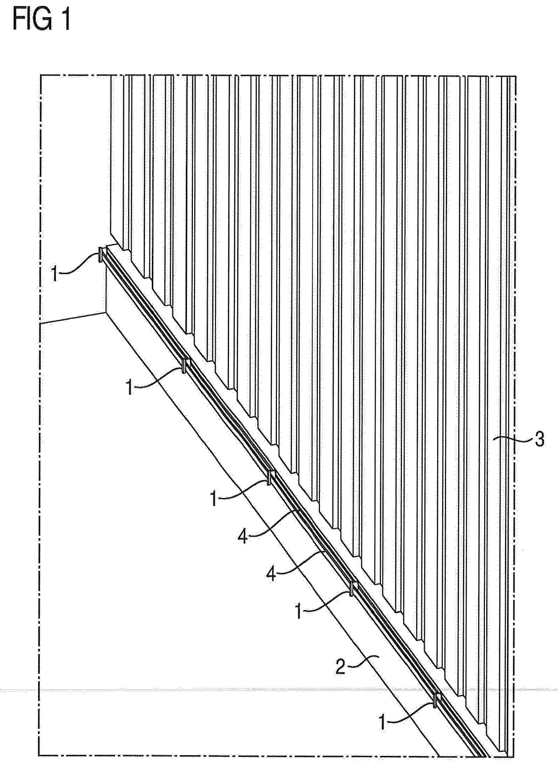

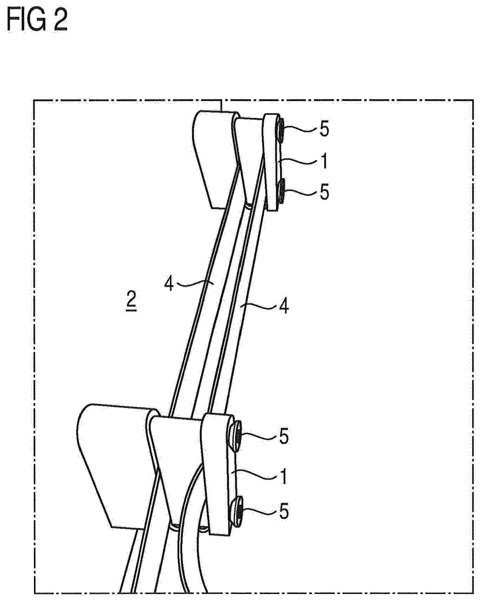

FIG 1 and FIG 2 show an electric fence system attached to the plinth 2 of a building. The electric fence system comprises at least two electric fence strips 4 being fastened to the plinth 2 by means of fasteners 1. As an alternative to fastening to the plinth 2, or in addition to that, the electric fence strips 4 of the electric fence system can be fastened by means of the fasteners 1 to the wall 3 or, in addition to or instead of the plinth, to some other above ground part of the foundation, such as a mock socle.

As shown in FIG 2, the fasteners 1 are attached by means of fastening screws 5 to be mounted through the fastener 1. Then, depending on the material of the wall 3, plinth 2, or other above ground part of the foundation to be used as the substrate, mounting plugs, such as for example expanding plugs (if the substrate is concrete or cement) can additionally be used or left unused, such as for example if the substrate is wooden.

At least two electric fence strips 4 are attached by each single fastener 1 to a distance from each other and from the substrate.

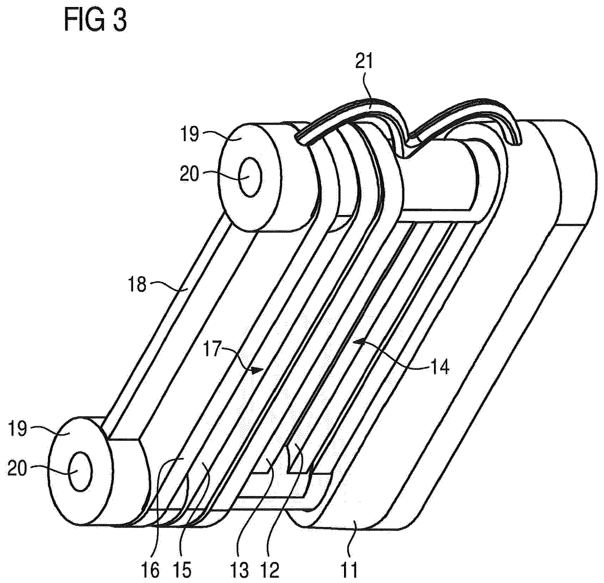

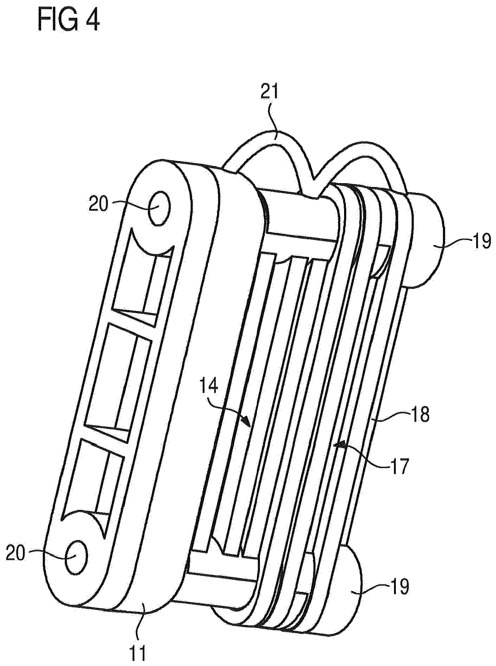

FIG 3 and FIG 4 show a possible embodiment of the fastener 1.

The fastener 1 comprises a first electric fence strip clamping slot 14 for a first electric fence strip 4 and, at a distance from it, a second electric fence strip clamping slot 17 for a second electric fence strip 4. The first and the second clamping slot 14, 17 are both tightenable such that the electric fence strip 4 in a clamping slot 14, 17 is locked in place.

Most preferably, the fastener 1 comprises a lower portion 11 and at least one upper portion 18. The first electric fence strip 4 is guided between support surfaces 12 and 13 into the electric fence strip clamping slot 14. The second electric fence strip 4 is guided between support surface 15 and support surface 16 into the electric fence strip clamping slot 17. Preferably, the fastener 1 also comprises at least one intermediate portion located between the lower portion 11 and the upper portion 18. Then, the lower portion 11, the intermediate portion (portions) and the upper portion 18 are best interconnected by means of a connector 21, that holds the lower portion 11 and the upper portion and the intermediate portion (portions) between them interconnected even when the fastener 1 is not yet attached to its substrate by fastening means (fastening screw 5). Due to this, mounting the electric fence strips 4 to the fastener 1 is facilitated. Thus the assembling of the electric fence system becomes easier.

The fastener 1 comprises mutually opposing fastening parts 19 on both sides of the clamping slots, each fastening part having a hole 20, into which the fastening screw 5 by which the fastener 1 can be attached to the wall 3, the plinth 2, a mock socle or other above ground part of the foundation of a building, is screwed.

The fastener 1 is attached to its substrate by screwing the fastening screw 5 into each hole 20 of the fastening part 19, the number of holes being possibly one, two, three or more. The upper portion 18 is then pressed toward the lower portion 11 and the lower portion 11 is being attached to the substrate through the action of the fastening screw 5. On the other hand then, the first and the second electric fence strip 4 are pressed in their own clamping slots 14, 17 and thus get attached to the fastener 1.

The clamping slot or slots 14, 17 are implemented such that the screw 5, as it is screwed in, will press the upper surface 13, 16 against the opposite lower surface 12, 15 eventually locking the electric fence strip 4 in place.

It is preferred to tighten the electric fence strip 4 to the fastener 1 in connection with the mounting job such that the electric fence strip section in the area between adjacent fasteners 1 turn out tight. Tightening can be done for example by pulling manually. In order to illustrate the tightening, FIG 2 shows a segment of the second electric fence strip 4 prior to being tightened to the next fastener 1.

Most preferably, the fastener is made of an electrically insulating material or it contains electrically insulating material. Electrically insulating material is arranged at least such that the support surfaces 12, 13, 15, 16 of the first clamping slot 14 and the second clamping slot 17 are made of electrically insulating material.

The electric fence system comprises a first electric fence strip 4 and a second electric fence strip 4 extending around a building, said strips being attached to the wall 3, the plinth 2, a mock socle or other above ground part of the foundation of the building by means of a number of fasteners 1 according to any one of the preceding claims.

Both the first electric fence strip 4 and the second electric fence strip 4 are connected to a high-voltage output pole of an electric fence device using a connection lead. Both electric fence strips 4 contain a reference wire, or set of wires, connected to a reference potential, i.e. the so called earth, of the electric fence device using a connection lead, and additionally at least one electric fence or set of electric fences connected to the high-voltage output pole of the electric fence device using a connection lead. The reference potential of the electric fence device can be floating, or it may be connected to the ground potential for example by means of a separate earth conductor.

By means of the fastener 1, the first electric fence strip 4, located closer to the building, stays galvanically separated from the substrate (i.e. the wall 2 of the building, or its plinth 3, or equivalent) of the fastener 1, and, by means of the fastener 1, the second electric fence strip 4, located farther from the building, stays galvanically separated from the first electric fence strip 4.

The distance between the first clamping slot 14 and the lower edge of the fastener 1, i.e. the part ending up against the wall 3, the plinth 2, the mock socle or other above ground part of the foundation of the building, is most preferably 1 - 2 cm.

The distance between the first clamping slot 14 and the second clamping slot 17 is most preferably 1.5 - 2.5 cm.

The invention is not be understood to be intended to be limited only to the enclosed patent claims but should be understood to include all of their legal equivalents and all combinations of the presented embodiments.

The fastener 1 can also contain a third clamping slot for a third electric fence strip. Also, the electric fence system may comprise a third electric fence cable, with a reference wire or set of wires, connected by means of a connection lead to the reference potential of the electric fence device, i.e. the so called earth, and additionally at least one electric fence wire or set of electric fence wires connected by means of a connection lead to the high-voltage output pole of the electric fence device.

### List of reference numerals used:

- 1: fastener
- 2: plinth
- 3: wall
- 4: electric fence strip
- 5: fastening screw
- 11: lower portion
- 12: lower surface
- 13: upper surface
- 14: clamping slot for the electric fence strip
- 15: lower surface
- 16: upper surface
- 17: clamping slot for the electric fence strip
- 18: upper portion
- 19: fastening part
- 20: hole of the fastening part
- 21: connector

## Claims

1. A fastener (1) for an electric fence system, **characterized in that** the fastener (1) comprises:
- an upper portion (18), a lower portion (11) and at least one intermediate portion located between the upper and the lower portions, arranged such, that:
a first electric fence strip clamping slot (14) for a first electric fence strip (4) is formed between the lower portion (11) and an intermediate portion, and
at a distance from the first electric fence strip clamping slot (14), a second electric fence strip clamping slot (17) for a second electric fence strip (4) is formed between an intermediate portion and the upper portion (18);
- mutually opposite fastening parts (19) on both sides of the clamping slots (14, 17), said fastening parts (19) each having a hole (20) to receive a fastening screw (5) by means of which the fastener (1) can be attached to the wall (3), the plinth, the mock socle or other above ground part of the foundation of a building; and
- the first and the second clamping slot (14, 17) both being tightenable by tightening the fastening screws (5) such that the electric fence strip (4) in each clamping slot (14, 17) is locked in place as the fastening screw, as it is being turned, presses the upper support surface (13, 16) of the clamping slot (14, 17) in question against the opposite lower surface (12, 15) finally locking both electric fence strips (4) in place;
additionally, the fastener (1) is made of an electrically insulating material or contains electrically insulating material, which is arranged such that the support surfaces (12, 13, 15, 16) of the first clamping slot (14) and the second clamping slot (17) are made of an electrically insulating material.

2. The fastener (1) according to claim 1, wherein there is a third clamping slot for a third electric fence strip (4).

3. The fastener (1) according to any one of the preceding claims, wherein the distance between the first clamping slot (14) and the lower edge of the fastener (1), i.e. the part ending up against the wall (3), the plinth (2), the mock socle or other above ground part of the foundation of a building, is 1 - 2 cm.

4. The fastener (1) according to any one of the preceding claims, wherein the distance between the first clamping slot (14) and the second clamping slot (17) is most preferably 1.5 - 2.5 cm.

5. The fastener (1) according to any one of the preceding claims, additionally comprising an upper portion (18), a lower portion (11) and a connector (21) in connection with at least one intermediate portion, located between the upper and the lower portions, which connector (21) holds the upper portion (18), the lower portion (11) and the intermediate portion located between them mutually connected when the fastener (1) has not yet been mounted on its substrate.

6. An electric fence system **characterized in, that** it comprises a first electric fence strip (4) and a second electric fence strip (4) attached, by means of a number of fasteners (1) according to any one of the preceding claims, to the wall (3), the plinth (2), the mock socle or other above ground part of the foundation of a building, which electric fence strips extend around the building, wherein the first electric fence strip (4), located closer to the building, stays galvanically isolated from the building by means of the fastener (1), and the second electric fence strip (4), located further from the building than the first electric fence strip (4), stays galvanically isolated from the first electric fence strip (4) by means of the fastener (1).
